# EUROPÄISCHE PATENTSCHRIFT

(11) **EP 2 952 418 B1**
(45) Veröffentlichungstag und Bekanntmachung des Hinweises auf die Patenterteilung: **01.11.2017**
(21) Anmeldenummer: 15001256.5
(22) Anmeldetag: 28.04.2015
(51) Int. Cl.: B62D 33/06, B62D 35/00, B62D 33/067

(54) **BAUSATZ FÜR NUTZFAHRZEUG-FAHRERHÄUSER UNGLEICHER ABMESSUNGEN**
KIT FOR COMMERCIAL VEHICLE DRIVER CABS OF UNEQUAL DIMENSIONS
JEU DE PIÈCES DÉTACHÉES POUR CABINES DE VÉHICULE UTILITAIRE DE DIFFÉRENTES DIMENSIONS

(30) Priorität: 06.06.2014 DE 102014008631
(43) Veröffentlichungstag der Anmeldung: 09.12.2015
(73) Patentinhaber: MAN Truck & Bus AG, 80995 München (DE)
(72) Erfinder: Schönegger-Fösleitner, Erich, 8933 St. Gallen (AT); Rohrmüller, Hans, 82216 Maisach (DE)
(74) Vertreter: v. Bezold & Partner Patentanwälte - PartG mbB

(56) Entgegenhaltungen:
- EP-A1- 0 716 005
- DE-U1- 9 012 740
- US-A- 5 735 568

## Beschreibung

Die Erfindung betrifft einen Bausatz für ein Nutzfahrzeug-Fahrerhaus mit Frontlenkung, wobei solche Fahrerhäuser in der Regel nach vorn kippbar sind. Für die unterschiedlichsten Einsatzzwecke von Nutzfahrzeugen muss eine gewisse Typenvielfalt von Fahrerhäusern bereitgestellt werden. Für den Fernlastverkehr ist es z.B. notwendig, ein bis zwei Schlafliegen bereitzustellen. Hingegen werden im Güternahverkehr und Verteilerverkehr sowie für Baustellenfahrzeuge keine Betten benötigt bzw. nur in Klappversionen, wobei ein Fahrbetrieb des Nutzfahrzeugs nicht möglich sein muss. Daher werden unterschiedlichste Anforderungen an die Abmessungen bzw. Größe solcher Fahrerhäuser gestellt. Um diesen Anforderungen gerecht zu werden, wurden vielfach jeweils verschiedene Komponenten eingesetzt, um die jeweiligen Anforderungen an ein Nutzfahrzeug-Fahrerhaus abzubilden.

In der gattungsgemäßen EP 0 716 005 A1 wird erstmalig vorgeschlagen, eine Schmal-Kurz-Version sowie eine Breit-Lang-Version jeweils mit einer schmalen Vorderwand auszuführen. Dies ist besonders vorteilhaft, weil die Vorderwand eine hohe Komplexität aufweist, denn sie umfasst unter anderem die Windschutzscheibe, die Armaturen, die Anordnung der Sitze und bei nach vorn kippbaren Fahrerhäusern ebenfalls den Anschluss zum Chassis. Gemäß der Lehre der EP 0 716 005 A1 wird vorgeschlagen, die Seitenwand bei der Breit-Lang-Version unter einem Winkel nach außen weisend auszuführen und bei der Schmal-Kurz-Version die Seitenwand rechtwinklig zur Vorderwand und zur Rückwand auszuführen. Auch wenn dieses Konzept einer Fahrerhaus-Baureihe bereits fertigungstechnisch einige Vorteile hat, wurde festgestellt, dass der innen liegende Hinterraum, der zwischen den hinter den Türen angeordneten Seitenwänden gebildet ist, kleiner ist bzw. aufgrund schwer zugänglicher Bereiche nicht ausreichend genutzt werden kann.

Der vorliegenden Erfindung liegt davon ausgehend die Aufgabe zugrunde, die aus dem Stand der Technik bekannten Nachteile zumindest teilweise zu überwinden. Insbesondere soll ein Bausatz für Nutzfahrzeug-Fahrerhäuser angegeben werden, mit dem durch eine geringe Anzahl unterschiedlicher Komponenten sowohl eine Schmal-Version als auch eine Breit-Version hergestellt werden kann, wobei der erforderliche Innenraum maximiert wird. Dabei soll der Bausatz sowohl die Fertigung bzw. Lagerung der Komponenten vereinfachen, die Teilevielzahl für unterschiedliche Nutzfahrzeug-Fahrerhäuser reduzieren und/oder eine komfortable und praktische Nutzung des Innenraums der Nutzfahrzeug-Fahrerhäuser ermöglichen. Gleichzeitig soll die Fahrdynamik des Nutzfahrzeugs, insbesondere hinsichtlich des Windwiderstandes, sowie der Kraftstoffverbrauch des Nutzfahrzeugs zumindest beibehalten werden.

Die Aufgaben werden gelöst durch den Bausatz für ein Nutzfahrzeug-Fahrerhaus mit Frontlenkung mit den Merkmalen des unabhängigen Patentanspruchs 1. Vorteilhafte Weiterbildungen sind Gegenstand der abhängigen Patentansprüche. Es ist darauf hinzuweisen, dass die in den Patentansprüchen einzeln angegeben Merkmale beliebig miteinander kombiniert werden können. Ebenso gibt die Beschreibung, insbesondere im Zusammenhang mit den Figuren, Hinweise auf weitere Merkmalskombinationen und besonders bevorzugte Ausführungsbeispiele der Erfindung.

Gemäß der Erfindung wird ein Bausatz für ein Nutzfahrzeug-Fahrerhaus mit Frontlenkung vorgeschlagen, dass zumindest die folgenden zwei Versionen aufweist:
- Schmal-Version; und
- Breit-Version.
Die Versionen sind aus zumindest den folgenden Komponenten gebildet, die einen Innenraum umschließen:
- eine Vorderwand;
- eine Rückwand;
- zwei flache Seitenwände benachbart zur Rückwand; und
- zwei gekrümmte Türen mit einem ersten Anschluss hin zur Vorderwand und einem zweiten Anschluss hin zu den Seitenwänden.
Dabei weist die Schmal-Version eine schmale, insbesondere einteilige, Rückwand und die Breit-Version eine im Vergleich zur Schmal-Version breite, einteilig oder mehrteilig ausgeführte, Rückwand auf. Beide Versionen weisen die gleiche (schmale) Vorderwand auf. Weiterhin sind die zwei flachen Seitenwände im (Wesentlichen) senkrecht zur Vorderwand und Rückwand ausgerichtet. Die zwei gekrümmten Türen sind zudem bei der Schmal-Version in einem kleineren Innenwinkel zur Vorderwand ausgerichtet als bei der Breit-Version.

Ein Bausatz gemäß der vorliegenden Erfindung zeichnet sich insbesondere dadurch aus, dass mit einer geringen Anzahl an Teilen unterschiedliche Versionen eines Nutzfahrzeug-Fahrerhauses hergestellt werden können, so dass es möglich ist, den unterschiedlichen Anforderungen der verschiedenen Einsatzzwecke durch eine variable Verwendung dieser Teile gerecht zu werden. Die vorliegende Erfindung konzentriert sich auf zwei Versionen, eine Schmal-Version und eine Breit-Version. Jedoch können im Unterschied zum Stand der Technik beide Versionen sowohl kurz als auch lang sowie niedrig oder hoch ausgeführt werden. Die Abmaße der Versionen richten sich nach den üblichen im Verkehr durchgesetzten Abmaßen in Bezug auf die obig genannten Einsatzzwecke. Die genannten Komponenten stellen lediglich diejenigen Komponenten dar, die wesentlich sind, um einen Innenraum bzw. den Grundriss eines Innenraums zu umschließen. Unbeachtlich davon weisen die betreffenden Nutzfahrzeug-Fahrerhäuser noch weitere Komponenten auf, wie z.B. die Windschutzscheibe, das Armaturenbrett sowie andere wesentliche Bauteile, wie sie z.B. in der EP 0 716 005 A1 genannt sind. Die Türen sind hierbei (gesehen in einer Verlaufsrichtung von vorne nach hinten) gekrümmt, was insbesondere bedeutet, dass sie im Wesentlichen einen Bogen oder eine krumme Fläche beschreiben. Über den ersten Anschluss und den zweiten Anschluss sind die gekrümmten Türen jeweils mit der Vorderwand bzw. mit der jeweiligen flachen Seitenwand im hinteren Bereich verbindbar. Die zwei flachen Seitenwände sind (gesehen in einer Verlaufsrichtung von vorne nach hinten) im Wesentlichen eben und weisen insbesondere keine signifikante Wölbung auf, die auf die Gesamtgestalt wesentlichen Einfluss nimmt. Die Rückwand schließt den Innenraum nach hinten ab und ist insbesondere (gesehen in einer Verlaufsrichtung quer zur Fahrtrichtung) ebenfalls im Wesentlichen eben ausgeführt.

Die Schmal-Version und die Breit-Version unterscheiden sich nun also maßgeblich nur in der Verwendung einer schmalen bzw. einer breiten (ggf. mehrteiligen) Rückwand. An der Front des Nutzfahrzeug-Fahrerhauses weisen sie beide die gleiche schmale Vorderwand auf. Hierdurch wird die Verwendung von verschiedenen Anbauteilen wie z.B. die Windschutzscheibe und das Armaturenbrett und sonstige hauptsächlich auf den Fahrtbetrieb gerichtete Bauteile für beide Versionen reduziert. Darüber hinaus wird die Luft-Anströmfläche des Nutzfahrzeug-Fahrerhauses reduziert.

Weiterhin sind die zwei flachen Seitenwände im Wesentlichen rechtwinklig zu einer mittigen Tangente der Vorderwand ausgerichtet. Damit ist insbesondere gemeint, dass die Seitenwände parallel zur Geradeaus-Fahrtrichtung angeordnet sind. Ebenfalls sind die zwei flachen Seitenwände im Wesentlichen rechtwinklig zu einer mittigen Tangente der Rückwand ausgerichtet. Dadurch spannen die zwei flachen Seitenwände mit der Rückwand einen im Wesentlichen rechteckigen Grundriss der rückwärtigen Seite des Nutzfahrzeug-Fahrerhauses auf. Dadurch bleibt der rückwärtige Raum genauso groß wie bei der Individualteilausführung des Stands der Technik und weist insbesondere keine spitzen Winkel auf, die einen nicht nutzbaren Totraum erzeugen. Darüber hinaus ist es bei dieser Ausführung möglich, die beide Versionen (Schmal-Version und Breit-Version) lang oder kurz auszuführen, ohne dass die Seitenwände anders ausgerichtet werden müssen. Demnach ist nun auch möglich, Fahrerhäuser mit Individuallängen abzubilden, ohne dass eine andere Änderung vorgenommen werden muss, als die Länge der flachen Seitenwände zu verändern.

Die zwei gekrümmten Türen bilden - abstrakt und in Fahrtrichtung gesehen - im Wesentlichen eine gekrümmte, dass heißt mit anderen Worten auch nicht-planare, Ebene. Besonders bevorzugt ist hierbei eine Bogenform, die von außen betrachtet zwischen dem ersten Anschluss und dem zweiten Anschluss eine im Wesentlichen konvexe Krümmung ausbildet. Diese Ebene ist insbesondere so ausgeführt, dass sie tangential in die Vorderwand und ebenfalls tangential in die jeweils angeschlossene flache Seitenwand übergeht. Hierdurch wird nicht nur erreicht, dass die Seitenwand parallel zur Fahrtrichtung ausgerichtet sein kann, sondern durch den formbündigen Übergang zwischen der Frontfläche bzw. Prallfläche der Vorderwand zur Anströmungsfläche der Rückseite kann auch der Windwiderstand (bzw. der c_{w}-Wert) gegenüber einem abrupten, kantigen Übergang wesentlich reduziert werden. Des Weiteren ergibt sich aus dieser Konfiguration der Vorderwand mit den gekrümmten Türen, dass auch bei der Schmal-Version die Vorderwand schmaler ausgeführt ist, als dies bei den schmalen Versionen des Stands der Technik der Fall ist. Zugleich werden aber keine Einbußen im Raumangebot bei der Führung des Fahrzeuges herbeigeführt, weil sich die Größe des Bereichs der Fahrzeugführung bisher an der Größe des rückwärtigen Raums orientiert hat. Mit anderen Worten wird der tatsächliche Fahrerraum gegenüber den Fahrzeugen des Stands der Technik mitunter ein wenig kleiner, jedoch nur in solcher Weise, dass dies von einem Fahrer des Fahrzeugs im Wesentlichen unbemerkt bleibt bzw. sogar die Übersicht hin nach außen verbessert wird.

Der Unterschied zwischen den zwei Versionen, der Schmal-Version und Breit-Version, lässt sich auch so beschreiben, dass eine Sekante, die zwischen dem ersten Anschluss und dem zweiten Anschluss der gekrümmten Tür gezogen werden kann, bei der Schmal-Version in einem kleineren Innenwinkel zur Tangente der Vorderwand ausgerichtet als bei der Breit-Version. Der Innenwinkel ist nun so zu wählen, dass ein Unterschied in der Breite der Vorderwand zur Rückwand durch die gekrümmten Türen überbrückt wird. Somit ist die projizierte Fläche der gekrümmten Türen auf die Frontalansicht des Nutzfahrzeug-Fahrerhauses bei der Schmal-Version kleiner als bei der Breit-Version. Ebenso könnte dieser Umstand so beschrieben werden, dass die gekrümmten Türen in der geschlossenen Position relativ zur Fahrtrichtung des Nutzfahrzeuges bei der Schmal-Version einen kleinen Innenwinkel und bei der Breit-Version einen im Vergleich zur Schmal-Version größeren Innenwinkel bilden. Der Innenwinkel kann insbesondere zwischen der Fahrtrichtung (oder einer Parallelen durch den ersten Anschluss) und dem (nach außen gewölbten) Tür-Verlauf bestimmt werden, in dem eine Sekante bzw. plane Ebene betrachtet wird, die durch die Lage der Anschlüsse definiert ist. Bei den beiden Versionen ist die Lage des (vorderen) ersten Anschlusses regelmäßig gleich, aber die Lage des (hinteren) zweiten Anschlusses unterschiedlich, wobei der zweite Anschluss bei der Breit-Version weiter außen positioniert ist. Damit ergibt sich hier ein größerer Innenwinkel bei der Breit-Version.

In einer vorteilhaften Weiterbildung des Bausatzes weisen die zwei gekrümmten Türen im Bereich von den ersten Anschlüssen und/oder den zweiten Anschlüssen eine (hin zum Innenraum weisende) Knickung oder Biegung auf, die insbesondere von einem Radius der zwei gekrümmten Türen abweicht.

Durch die (einzelne oder mehrere) Knickung und/oder Biegung wird ein Übergang zu den angeschlossenen Bauteilen Vorderwand und/oder Seitenwand erreicht. Mitunter kann aber bei einem der Anschlüsse eine zusätzliche Knickung oder Biegung aufgrund eines gewellten Innenwinkels überflüssig sein. Eine Knickung unterscheidet sich von der Biegung dadurch, dass die Knickung innerhalb einer scharfen Umgrenzung gewinkelt ist und die Biegung über einen größeren Bereich mit deutlich sanfterem Übergang zwischen den infinitessimalen Winkeländerungen aufweist. Insbesondere wird die Knickung mit üblichen Radien durch einmaliges Kanten an einer Kantmaschine erreicht, während die Biegung z.B. über mehrere benachbarte Bereiche mehrmals und weniger stark gebogen wird. Wird über die verbleibende Ebene der gekrümmten Türen gedanklich ein (mittlerer) Radius gezogen, so weichen die Knickung bzw. Biegung insbesondere von diesem (regelmäßig deutlich größeren) Radius ab. Hierdurch wird insbesondere erreicht, dass Gegenanschlüsse an der Vorderwand bzw. an der Seitenwand keiner Veränderung bzw. Anpassung an die zwei Versionen bedürfen, so dass der Komponentenaufwand des Bausatzes weiter verringert wird.

In einer vorteilhaften Weiterbildung des Bausatzes ist die Rückwand sowohl bei der Schmal-Version als auch bei der Breit-Version gleich ausgeführt und die flachen Seitenwände weisen bei der Breit-Version einen abgewinkelten Abschnitt auf, so dass die abgewinkelten Abschnitte der zwei flachen Seitenwände mit der schmalen Rückwand eine breite Rückseite bilden.

Dies hat insbesondere den Vorteil, dass lediglich eine schmale Rückwand für beide Versionen notwendig ist. Insbesondere bei einer Ausführung gemäß der eine Anpassung der Seitenwände an den jeweiligen Innenwinkel der gekrümmten Türen notwendig ist, bietet es sich an, für die zwei Versionen jeweils unterschiedliche Seitenwände zu verwenden, wodurch die Anpassungsschritte ausschließlich auf die Seitenwände beschränkt sind.

In einer vorteilhaften Weiterbildung des Bausatzes sind die zwei flachen Seitenwände bei der Schmal-Version und der Breit-Version baugleich.

Die Rückwand ist in der Regel ein wenig komplexes Bauteil. Die Fertigung von zwei Versionen ist daher gegenüber der Fertigung von zwei unterschiedlichen Seitenwänden deutlich kostengünstiger auszuführen. Insbesondere bei einer Anpassung der Anschlüsse der gekrümmten Türen, wodurch die Gegenanschlüsse bei den flachen Seitenwänden sowohl für die Schmal-Version als auch für die Breit-Version unverändert bleiben können, ist es daher vorteilhaft, auf eine Ausgestaltung von unterschiedlichen Seitenwänden für die zwei Versionen zu verzichten.

Weiter wird als besonders vorteilhaft angesehen, dass sich die Komponenten Vorderwand, Rückwand, Seitenwände und Türen hinsichtlich der Schmal-Version und der Breit-Version nur in der Form der Seitenwände unterscheiden. Das heißt mit anderen Worten insbesondere, dass die gleichen Ausführungsvarianten für die Vorderwand, die Rückwand und die Türen sowohl für die Breit-Version als auch für die Schmal-Version eingesetzt werden können. Die unterschiedlichen Ausstellwinkel für die Türen werden in diesem Fall im Wesentlichen nur mit den (jeweils an die Version angepassten) Seitenwänden ausgeglichen. Selbstverständlich können auch noch die Verbindungsmittel, Lager, Dichtungen, Anschläge, etc. angepasst sein (zumindest hinsichtlich ihrer Ausrichtung).

In einer Ausführungsvariante weisen die zwei flachen Seitenwände im Bereich des jeweiligen Anschlusses eine Biegung oder Knickung auf, so dass der Übergang an den Anschlüssen im Wesentlichen stetig ist. Weiter sind die gekrümmten Türen in der Schmal-Version den gekrümmten Türen der Breit-Version baugleich.

Hierdurch wird unter anderem erreicht, dass - insbesondere neben der Vorderwand und der Rückwand - auch die gekrümmten Türen für beide Versionen - schmal und breit - ohne weitere Anpassungen und/oder Komponentenaustausch eingesetzt werden können. Damit kann die Komponentenzahl auch bei einer größeren Variantenvielfalt weiter reduziert werden.

Die angestrebte Stetigkeit beim Übergang an den Anschlüssen - auch in den zuvor genannten Ausführungsvarianten - ist hierbei nicht ausschließlich mathematisch zu verstehen, sondern auch strömungstechnisch oder optisch. In der Regel werden sich zwischen den Bauteilen des Bausatzes Spalte ergeben, die eine rein mathematische Stetigkeit ausschließen, aber dennoch gedanklich sich zu einer stetigen Kurve verbinden. In dieser Variante beschränkt sich somit der Unterschied in den Bauteilen zwischen der Schmal-Version und Breit-Version lediglich in der Ausführung der zwei flachen Seitenteile.

In einer Ausführungsvariante des Bausatzes ist alternativ oder zusätzlich vorgesehen, dass für die Schmal-Version und die Breit-Version die selben Türen verwendet werden und die Krümmung der Tür bei der Schmal-Version im Bereich (9, 11) in etwa tangential den formalen Anschluss an die flachen Seitenwände findet, während der formale Anschluss der Krümmung der Tür bei der Breit-Version tangential im vordersten Bereich (5, 6) der flachen Seitenwände gestaltet ist.

In einer Ausführungsvariante des Bausatzes ist alternativ oder zusätzlich vorgesehen, dass die Schmal-Version und die Breit-Version gleiche Türen aufweisen und sich die zweiten Anschlüsse der Türen tangential in die flachen Seitenwände erstrecken, wobei der tangentiale Übergang zwischen den zweiten Anschlüssen der Türen und den flachen Seitenwänden bei der Breit-Version durch einen gekrümmten vorderen Bereich der flachen Seitenwände gebildet ist. Dabei ist mit vorderem Bereich der Bereich der flachen Seitenwände gemeint, der an den zweiten Anschluss angrenzt. Dadurch kann in einfacher Weise ein kontinuierlicher, stromlinienförmiger Übergang realisiert werden.

Die Erfindung findet insbesondere Anwendung bei der Herstellung von Nutzfahrzeugen mit Fahrerhäusern unterschiedlicher Breite, Länge und Höhe. Ganz besonders bevorzugt ist hierbei die Herstellung von Nutzfahrzeugen, die Versionen mit und ohne einen Schlafplatz benachbart zur Rückwand ausbilden. Offensichtlich ist, dass für die vollständige Herstellung noch weitere Bauteile angebaut werden müssen, wie z. B. Dach, Bodengruppe, Bestuhlung, etc.. Da sich diese Varianten aber auch in einem Vergleich der Baureihe erkennen lassen, betrifft die Erfindung auch eine Nutzfahrzeug-Baureihe, die die erfindungsgemäß dargestellten Komponenten erfasst.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Die Figuren sind schematisch und benennen gleiche Bauteile mit gleichen Bezugszeichen. Es zeigen:
- Fig. 1:: einen Querschnitt der Breit-Version im Vergleich;
- Fig. 2:: einen Querschnitt der Schmal-Version im Vergleich zur Lösung des Stands der Technik, und
- Fig. 3:: eine Seitenansicht eines Fahrerhauses eines Nutzfahrzeugs.

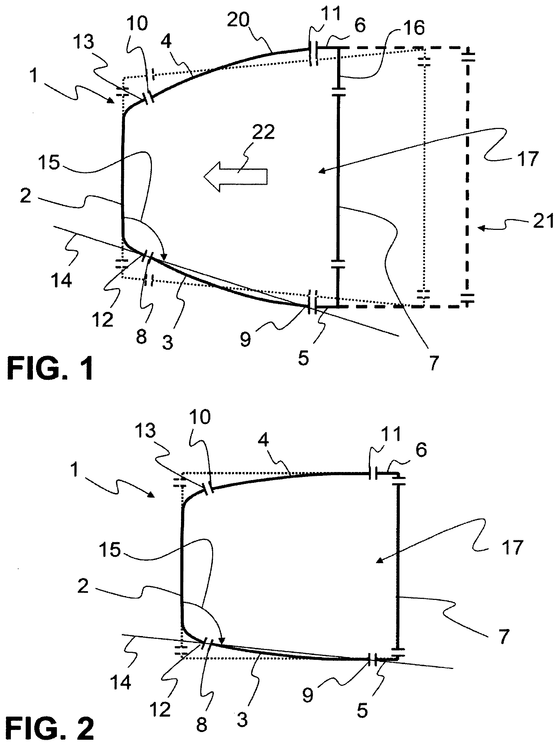

Fig. 1 zeigt den Bausatz 1 im Querschnitt einer Breit-Version eines Fahrerhauses mit einer vorgegebenen Fahrtrichtung 22, welcher eine Vorderwand 2, eine breite Rückwand 7 sowie zwei flache Seitenwände 5, 6 umfasst, die einen Innenraum 17 umschließen. Die Vorderwand 2 wird über die zwei gekrümmten Türen 3 bzw. 4 mit den Seitenwänden 5 bzw. 6 verbunden.

Auch dargestellt ist ein Querschnitt einer entsprechenden Breit-Lang-Version gemäß dem Stands der Technik (siehe punktierte Linie).

Weiterhin sind der erste Anschluss 8, 9 sowie der zweite Anschluss 10, 11 am Übergang zu den Komponenten Vorderwand 2 bzw. Seitenwand 5, 6 dargestellt.

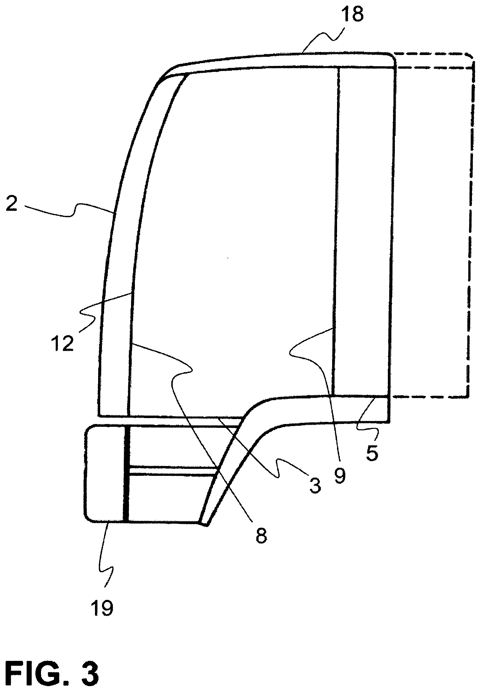

In einem weiteren Unterschied zum Stand der Technik weist die Vorderwand 2 bereits zu den Türen hin gekrümmte Gegenanschlüsse 12 und 13 auf. Der Vorteil dieser Maßnahme ist vor allen Dingen im Vergleich zu Fig. 2 und Fig.3 zu erkennen. Infolgedessen kann nämlich ein und dieselbe Vorderwand 2 für beide Versionen verwendet werden.

Bezüglich der Ausgestaltung der Rückwand 7 ist hier anzumerken, dass bei der Breit-Version die flachen Seitenwände 5, 6 einen abgewinkelten Abschnitt 16 aufweisen, so dass die abgewinkelten Abschnitte 16 zusammen mit der schmalen Rückwand 7, wie sie auch in der Schmal-Version in Fig. 2 eingesetzt ist, eine breite Rückseite 21 bilden.

Weiterhin sei an dieser Stelle darauf hingewiesen, dass im Vergleich zum Stand der Technik eine Breit-Kurz-Version deutlich einfacher umzusetzen ist als mit einer sich weiterhin schräg nach hinten verlängernden Gesamtseite, da beim Stand der Technik nicht einfach die breite Rückwand 7 weiter vorne angebracht werden kann, sondern vielmehr eine Änderung des Neigungswinkels der Gesamtseitenwand, bestehend aus Tür und Seitenwand, vorgesehen werden muss. Die Flexibilität der Länge ist nochmals durch eine besonders lange Version dargestellt, die mit einer gestrichelten Linie angedeutet ist.

Fig. 2 zeigt die gleichen Bauteile wie die Fig. 1, wobei hier insbesondere darauf zu achten ist, dass die Prallfläche bzw. Anströmfläche des erfindungsgemäßen Nutzfahrzeug-Fahrerhauses nach dem Bausatz 1 auch bei der Schmal-Version kleiner ist als die entsprechende Anströmfläche der Schmal-Kurz-Version des rein kastenförmigen Fahrerhaus-Grundrisses des Stands der Technik. Weiterhin ist hier zu erkennen, dass die zusätzlichen gekrümmten Gegenanschlussteile der Vorderwand 1 in beiden Versionen gleich gewählt werden kann. Hierdurch wird ein weiterer Umformschritt vermieden.

Bezüglich der zwei gekrümmten Türen 3, 4 ist im Vergleich von Fig. 1 und Fig. 2 zu erkennen, dass diese bei der Schmal-Version in einem kleineren Innenwinkel 15 zur Vorderwand 2 ausgerichtet sind als bei der Breit-Version. Der Innenwinkel 15 kann z. B. mittels einer Sekante 14 bestimmt werden, die zwischen dem ersten Anschluss 8 und dem zweiten Anschluss 9 der gekrümmten Tür 3 gezogen werden kann. Ausgehend von dieser Betrachtung, wird der Innenwinkel zwischen dem Verlauf (einer Tangente) der Vorderwand 2 und der Sekante 14 bestimmt. Ein lediglich betragsmäßig um 90° kleinerer Innenwinkel ergibt sich, wenn der Innenwinkel zwischen Fahrtrichtung 22 und Sekante 14 bestimmt wird.

Weiter ist darauf hinzuweisen, dass die zwei gekrümmten Türen 3, 4 im Bereich nahe der zweiten Anschlüsse 9, 11 eine Knickung bzw. Biegung 20 aufweist, die insbesondere von einem Radius der zwei gekrümmten Türen 3, 4 abweicht. So kann insbesondere ein "sanfter" Übergang zwischen Tür und Seitenwand bei beiden/allen Versionen des Bausatzes erreicht werden.

In Fig. 3 wird ein Bausatz 1 eines Nutzfahrzeug-Fahrerhaus in der Seitenansicht gezeigt, wobei hier der Unterschied zum Stand der Technik vor allen Dingen darin liegt, dass sich die Seitenwand 5 nicht einteilig bis zur Vorderwand 2 erstreckt, sondern vielmehr der gesamte Zwischenraum zwischen der Vorderwand 2 und der Seitenwand 5 durch die Tür 3 überbrückt wird. Dies bewirkt eine weitere deutliche Vereinfachung des zugrunde liegenden Bausatzes. Weiterhin sind in dieser Seitenansicht eine Dachkomponente 18 und ein Unterbau 19 gezeigt, wie sie im Stand der Technik grundsätzlich bekannt sind.

Damit löst die Erfindung zumindest teilweise, die im Zusammenhang mit dem Stand der Technik geschilderten technischen Probleme. Insbesondere wurde ein Bausatz vorgeschlagen, der die Flexibilität an die Anforderungen unterschiedlicher Einsatzzwecke von Nutzfahrzeugen deutlich erhöht und zugleich die Anzahl an unterschiedlichen Bauteilen reduziert.

### Bezugszeichenliste

- 1: Bausatz
- 2: Vorderwand
- 3: linke gekrümmte Tür
- 4: rechte gekrümmte Tür
- 5: linke flache Seitenwand
- 6: rechte flache Seitenwand
- 7: Rückwand
- 8: linker erster Anschluss
- 9: linker zweiter Anschluss
- 10: rechter erster Anschluss
- 11: rechter zweiter Anschluss
- 12: linker Gegenanschluss
- 13: rechter Gegenanschluss
- 14: Sekante
- 15: Innenwinkel
- 16: gewinkelter Abschnitt
- 17: Innenraum
- 18: Dachkomponente
- 19: Unterbau
- 20: Biegung/Knickung
- 21: Rückseite
- 22: Fahrtrichtung

## Patentansprüche

1. Bausatz (1) für ein Nutzfahrzeug-Fahrerhaus mit Frontlenkung aufweisend zumindest die folgenden zwei Versionen:
- Schmal-Version; und
- Breit-Version,
gebildet mit zumindest den folgenden Komponenten, die einen Innenraum (17) umschließen:
- eine Vorderwand (2);
- eine Rückwand (7);
- zwei flache Seitenwände (5, 6) benachbart zur Rückwand (7); und
- zwei Türen (3, 4) mit einem ersten Anschluss (8, 10) hin zur Vorderwand (2) und einem zweiten Anschluss (9, 11) hin zu den Seitenwänden (5, 6);
wobei die zwei Türen (3, 4) bei der Schmal-Version in einem kleineren Innenwinkel (15) zur Vorderwand (2) ausgerichtet sind als bei der Breit-Version;
wobei die Schmal-Version eine schmale Rückwand (7) und die Breit-Version eine im Vergleich zur Schmal-Version breitere Rückwand (7) aufweist, beide Versionen die gleiche Vorderwand (2) aufweisen und **dadurch gekennzeichnet,**
**dass** die Türen gekrümmt sind und dass
die zwei flachen Seitenwände (5, 6) senkrecht zur Vorderwand (2) und Rückwand (7) ausgerichtet sind.

2. Bausatz (1) nach Anspruch 1, wobei die zwei gekrümmten Türen (3, 4) im Bereich der ersten Anschlüsse (8, 10) und/oder der zweiten Anschlüsse (9, 11) eine Knickung oder Biegung (20) aufweisen, die insbesondere von einem Radius der zwei gekrümmten Türen (3, 4) abweicht.

3. Bausatz (1) nach Anspruch 1 oder 2, wobei die Rückwand (7) sowohl bei der Schmal-Version als auch bei der Breit-Version gleich ausgeführt ist und die flachen Seitenwände (5, 6) bei der Breit-Version einen abgewinkelten Abschnitt (16) aufweisen, so dass die abgewinkelten Abschnitte (16) mit der schmalen Rückwand (7) eine breite Rückseite (21) bilden.

4. Bausatz (1) nach Anspruch 1 oder 2, wobei die zwei flachen Seitenwände (5, 6) bei der Schmal-Version und der Breit-Version baugleich sind.

5. Bausatz (1) nach einem der vorhergehenden Ansprüche, wobei sich die Komponenten Vorderwand (2), Rückwand (7), Seitenwände (5, 6) und Türen (3, 4) hinsichtlich der Schmal-Version und der Breit-Version nur in der Form der Seitenwände (5, 6) unterscheiden.

6. Bausatz (1) nach einem der Ansprüche 1, 2, 3 oder 5, wobei die Schmal-Version und die Breit-Version gleiche Türen (3, 4) aufweisen und sich die zweiten Anschlüsse (9, 11) der Türen (3, 4) tangential in die flachen Seitenwände (5, 6) erstrecken, wobei der tangentiale Übergang zwischen den zweiten Anschlüssen (9, 11) der Türen (3, 4) und den flachen Seitenwänden (5, 6) bei der Breit-Version durch einen gekrümmten vorderen Bereich der flachen Seitenwände (5, 6) gebildet ist.

## Claims

1. Construction kit (1) for a utility vehicle driver cabin having front wheel steering, having at least the following two versions:
- narrow version; and
- wide version,
formed with at least the following components which surround an inner space (17):
- a front wall (2);
- a rear wall (7);
- two flat side walls (5, 6) which are adjacent to the rear wall (7); and
- two doors (3, 4) having a first connection (8, 10) with respect to the front wall (2) and a second connection (9, 11) with respect to the side walls (5, 6);
wherein the two doors (3, 4) are orientated in the narrow version at a smaller internal angle (15) with respect to the front wall (2) than in the wide version;
wherein the narrow version has a narrow rear wall (7) and the wide version has a rear wall (7) which is wider in comparison with the narrow version, both versions have the same front wall (2) and **characterized in that** the doors are curved and **in that** the two flat side walls (5, 6) are orientated perpendicularly relative to the front wall (2) and rear wall (7).

2. Construction kit (1) according to Claim 1, wherein the two curved doors (3, 4) in the region of the first connections (8, 10) and/or the second connections (9, 11) have a fold or bend (20) which in particular differs from a radius of the two curved doors (3, 4).

3. Construction kit (1) according to Claim 1 or Claim 2, wherein the rear wall (7) is constructed in the same manner in both the narrow version and the wide version and the flat side walls (5, 6) have in the wide version an angled portion (16) so that the angled portions (16) form a wide rear side (21) with the narrow rear wall (7).

4. Construction kit (1) according to Claim 1 or Claim 2, wherein the two flat side walls (5, 6) in the narrow version and in the wide version are structurally identical.

5. Construction kit (1) according to any one of the preceding claims, wherein the components front wall (2), rear wall (7), side walls (5, 6) and doors (3, 4) differ only in terms of the shape of the side walls (5, 6) with respect to the narrow version and the wide version.

6. Construction kit (1) according to any one of Claims 1, 2, 3 or 5, wherein the narrow version and the wide version have identical doors (3, 4) and the second connections (9, 11) of the doors (3, 4) extend tangentially into the flat side walls (5, 6), wherein the tangential transition between the second connections (9, 11) of the doors (3, 4) and the flat side walls (5, 6) is formed in the wide version by a curved front region of the flat side walls (5, 6).

## Revendications

1. Jeu de pièces (1) pour une cabine de véhicule utilitaire, comprenant une direction avant présentant au moins les deux versions suivantes :
- version étroite ; et
- version large,
formées par engagement par correspondance de formes avec au moins deux des composants suivants, qui renferment un espace interne (17) :
- une paroi avant (2) ;
- une paroi arrière (7) ;
- deux parois latérales plates (5, 6) adjacentes à la paroi arrière (7) ; et
- deux portes (3, 4) avec un premier raccord (8, 10) à la paroi (2) et un deuxième raccord (9, 11) aux parois latérales (5, 6) ;
les deux portes (3, 4) dans la version étroite étant orientées suivant un plus petit angle interne (15) par rapport à la paroi avant (2) que dans la version large ;
la version étroite présentant une paroi arrière étroite (7) et la version large présentant une paroi arrière (7) plus large que la version étroite, les deux versions présentant la même paroi avant (2), et **caractérisé en ce que** les portes sont courbées et **en ce que** les deux parois latérales plates (5, 6) sont orientées perpendiculairement à la paroi avant (2) et à la paroi arrière (7).

2. Jeu de pièces (1) selon la revendication 1, dans lequel les deux portes courbes (3, 4) présentent, dans la région des premiers raccords (8, 10) et/ou des deuxièmes raccords (9, 11), un fléchissement ou une courbure (20) qui s'écarte notamment d'un rayon des deux portes courbes (3, 4).

3. Jeu de pièces (1) selon la revendication 1 ou 2, dans lequel la paroi arrière (7), est réalisée de manière identique dans la version étroite et dans la version large, et les parois latérales plates (5, 6) présentent, dans la version large, une portion coudée (16) de sorte que les portions coudées (16) forment avec la paroi arrière étroite (7) un côté arrière large (21).

4. Jeu de pièces (1) selon la revendication 1 ou 2, dans lequel les deux parois latérales plates (5, 6) sont construites de manière identique dans la version étroite et dans la version large.

5. Jeu de pièces (1) selon l'une quelconque des revendications précédentes, dans lequel les composants paroi avant (2), paroi arrière (7), parois latérales (5, 6) et portes (3, 4) se distinguent dans la version étroite et dans la version large uniquement de par la forme des parois latérales (5, 6) .

6. Jeu de pièces (1) selon l'une quelconque des revendications 1, 2, 3 ou 5, dans lequel la version étroite et la version large présentent les mêmes portes (3, 4) et les deuxièmes raccords (9, 11) des portes (3, 4) s'étendent tangentiellement dans les parois latérales plates (5, 6), la transition tangentielle entre les deuxièmes raccords (9, 11) des portes (3, 4) et les parois latérales plates (5, 6) dans la version large étant formée par une région avant courbe des parois latérales plates (5, 6).
